# EUROPEAN PATENT APPLICATION

(11) **EP 4 714 724 A1**
(43) Date of publication of application: **25.03.2026**
(21) Application number: 25203337.8
(22) Date of filing: 19.09.2025
(51) Int. Cl.: B60L 15/20, B60K 1/02, B60K 7/00

(54) **METHOD FOR CONTROLLING THE ELECTRIC MOTORS OF A ROAD MOTOR VEHICLE**

(30) Priority: 20.09.2024 IT 202400021046
(71) Applicant: FERRARI S.p.A., 41100 Modena (IT)
(72) Inventor: SEGALINI, Alessandro, 41100 MODENA (IT); CANESTRI, Jacopo, 41100 MODENA (IT); CAVANNA, Martino, 41100 MODENA (IT); FIORE, Luigi, 41100 MODENA (IT); GENOVA, Daniele, 41100 MODENA (IT); FOGLIASSO, Elisabetta, 41100 MODENA (IT)
(74) Representative: Studio Torta S.p.A.

(57) **Abstract**

Method for controlling the electric motors of a road motor vehicle (1) comprising: at least one pair of ground-resting wheels (11), which are arranged spaced side by side to one another, on opposite sides of the vertical midplane of the vehicle, to form a single axle of the vehicle; and a powertrain (3) that comprises a pair of independent electric motors (4), each of which is mechanically connected to a respective wheel (11) of said axle, so as to drive into rotation exclusively the same wheel (11); the method of controlling the electric motors comprising a motors-efficiency maximisation step that provides for alternately activating only one electric motor (4) of said pair of electric motors (4), causing it to temporarily deliver the entire mechanical power and/or drive torque momentarily requested to the powertrain (3).

## Description

### CROSS-REFERENCE TO RELATED APPLICATIONS

This patent application claims priority from Italian patent application no. 102024000021046 filed on September 20, 2024, the entire disclosure of which is incorporated herein by reference.

### TECHNICAL FIELD

The present invention relates to a method for controlling the electric motors of a road motor vehicle.

More in detail, the present invention preferably concerns a method for controlling the electric motors of a high-performance, electrically-propelled car, to which the following disclosure will make explicit reference without thereby losing in generality.

### STATE OF THE ART

As is known, in some electrically-propelled cars currently on the market the wheels of a same axle are driven into rotation, separately from one another, by two different and distinct electric traction motors, substantially identical to one another.

This architecture makes it possible to reduce, for the same installed drive power, the overall mass of the vehicle, because it eliminates the need to interpose a differential gear between the two wheels of the axle.

Unfortunately, despite this trick, the mass of an electrically-propelled car with twin electric motors is nevertheless considerably higher than the mass of a traditional car (i.e. with an internal combustion engine) of the same dimensions and power, with all the problems that this entails.

The greater mass of the vehicle, in fact, limits the performance of the car during acceleration and braking and, more importantly, increases the electric-energy or fuel consumption when the vehicle moves in chaotic city traffic, which is notoriously characterised by a relatively low average speed and by continuous accelerations and braking.

Unfortunately, these problems are exacerbated in high-performance, electrically-propelled cars that are notoriously provided with electric motors much more powerful than those of traditional electrically-propelled cars.

The electric motors of high-performance cars, in fact, are designed to have maximum efficiency when they deliver high powers, for which reason they have an electric-energy consumption proportionally higher than traditional electric motors, when the car on which they are mounted moves at low speed in city traffic.

Considering torque and rotational speed, in fact, the maximum-efficiency zone of an electric traction motor is located in the area adjacent to the maximum-power characteristic curve.

Therefore, as the maximum power of the electric motor increases, the zone of maximum efficiency moves more further away from the operating points normally associated with an urban/motorway cycle, characterised by low torques and powers.

Consequently, high-performance cars are generally characterised by a lower average efficiency compared to that of more commercial electrically-propelled cars.

### SUMMARY OF THE INVENTION

Aim of the present invention is to improve the efficiency of electrically-propelled cars that are provided with twin electric motors, without however impairing the performance of the vehicle.

In accordance with the above aims, according to the present invention there is provided a method for controlling the electric motors of a road motor vehicle as defined in claim 1 and preferably, though not necessarily, in any of the claims dependent thereon.

Moreover according to the present invention there is provided an electrically-propelled road motor vehicle as defined in claim 8.

### BRIEF DESCRIPTION OF THE FIGURES

The present invention will now be described with reference to the accompanying drawings, which illustrate a non-limiting embodiment thereof, wherein:
- Figure 1 is a perspective and schematic view of an electrically-propelled motor vehicle realized in accordance with the teachings of the present invention, with parts in transparency and parts removed for clarity's sake;
- Figure 2 shows the variation over time of the drive torque delivered by the two electric motors of the motor vehicle shown in Figure 1; whereas
- Figure 3 is an efficiency map of the two electric motors of the motor vehicle shown in Figure 1, as a function of the operating conditions thereof.

### DETAILED DESCRIPTION OF THE EMBODIMENTS

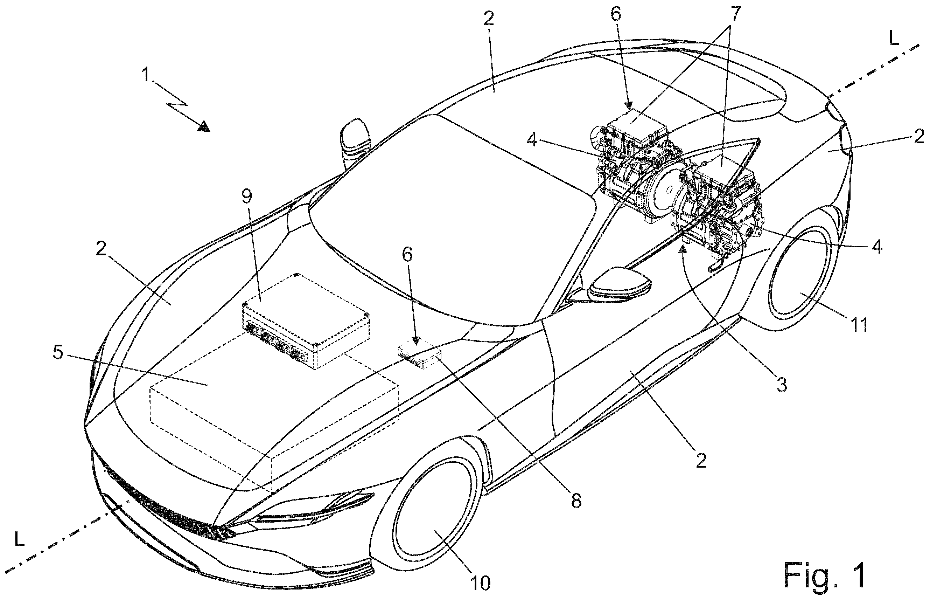

With reference to Figure 1, number 1 denotes as a whole an electrically-propelled road motor vehicle, which is provided with a plurality of ground-resting wheels and may be advantageously used for transporting goods and/or persons.

More in detail, the motor vehicle 1 is preferably a car for road use, i.e. a road motor vehicle for the private transport of persons.

The motor vehicle 1, in particular, is provided with a rigid vehicle-body 2 preferably with a self-supporting structure, which rests on the ground via a plurality of advantageously tyred, ground-resting wheels, and is provided with a passenger compartment structured and dimensioned for accommodating the vehicle driver (i.e. the person who drives the vehicle) and preferably also at least one passenger advantageously placed beside the same driver.

In addition, the motor vehicle 1 further comprises: a powertrain 3 that is located on the vehicle-body 2, or more advantageously inside the vehicle-body 2, and includes at least one pair of electric motors 4 adapted to separately drive into rotation at least one pair of ground-resting wheels; an electric-energy accumulator 5, preferably of the rechargeable type, which is located on the vehicle-body 2, or more advantageously inside the vehicle-body 2, and is capable of storing within itself a certain amount of electric energy to be supplied to the electric motors 4; and an electronic motors control equipment 6 that is located on the vehicle-body 2, or more advantageously inside the vehicle-body 2, and is adapted to power and command the electric motors 4 in accordance with the commands it receives from the driver of the vehicle.

More in detail, the motor vehicle 1 comprises at least one pair of ground-resting wheels, which are arranged spaced side by side to one other, on opposite sides of the vehicle vertical midplane and advantageously in a specular position with respect to the latter, and contribute to form a single axle of the vehicle.

Even more specifically, the ground-resting wheels belonging to a same axle are preferably aligned, or rather coaxial, to a same horizontal reference axis that is substantially perpendicular to the vehicle longitudinal axis L and, therefore, to the vehicle vertical midplane.

The powertrain 3, in turn, is preferably located on the supporting vehicle-body 2, between the two ground-resting wheels of said axle, and comprises two distinct electric traction motors 4, advantageously structurally substantially identical to one another, which are mechanically connected each to a single/respective wheel of said axle so as to drive into rotation exclusively the same wheel.

The electronic control equipment 6, on the other hand, is interposed between the electric-energy accumulator 5 and both electric motors 4, and is adapted to control/regulate the flow of electric energy separately towards the two electric motors 4, advantageously so as to control the drive torque, the rotation speed and the direction of rotation of both the electric motors 4.

More in detail, the electronic control equipment 6 is preferably adapted to command the electric motors 4 in accordance with the commands given by the vehicle driver, for example, via the accelerator pedal (not visible in the figures) and/or the gear selector (not visible in the figures), which allows the vehicle driver to select, at will and manually, the forward or reverse gear (reverse).

Even more specifically, the electronic control equipment 6 preferably comprises: a pair of electric power supply units 7, each of which is interposed between the electric-energy accumulator 5 and a respective/single electric motor 4, and is adapted to control/regulate the flow of electric energy towards the same electric motor 4, so as to control the drive torque, the rotation speed and the direction of rotation of said electric motor 4; and an electronic control unit 8 which is adapted to control simultaneously both electric power supply units 7 in accordance with the commands it receives from the vehicle driver, advantageously via the accelerator pedal (not visible in the figures) and/or the gear selector (not visible in the figures).

In other words, the electronic control unit 8 commands both the electric power supply units 7, which in turn appropriately power each a respective electric motor 4.

Preferably, the motor vehicle 1 moreover comprises a charging unit 9, which is located on the vehicle-body 2, or more advantageously inside the vehicle-body 2, and is selectively connectable to an external electric-energy source so as to supply, to the electric-energy accumulator 5, the electric energy necessary for its recharging.

More in detail, with reference to Figure 1, the vehicle-body 2 is preferably oblong in shape, and preferably rests on the ground by means of at least one pair of front wheels 10 and at least one pair of rear wheels 11.

The front wheels 10 are preferably arranged spaced apart and substantially coaxial to one another, on opposite sides of the vehicle vertical midplane, and contribute to form the front axle of the vehicle.

The rear wheels 11 are preferably arranged spaced apart and substantially coaxial to one another, on opposite sides of the vehicle vertical midplane, and contribute to form the front axle of the vehicle.

Preferably, the front wheels 10 and the rear wheels 11 are furthermore arranged on the vehicle-body 2 substantially at the vertices of a rectangle or an isosceles trapezium. Furthermore, the passenger compartment of the vehicle-body 2 is preferably located between the front wheels 10 and the rear wheels 11.

In addition, the front wheels 10 are preferably idle and steerable wheels, whereas the rear wheels 11 are preferably drive and optionally also steering wheels.

In other words, the electric motors 4 of the powertrain 3 are preferably mechanically connected each to a respective rear wheel 11, so as to drive into rotation exclusively said rear wheel 11.

In a different embodiment, however, the electric motors 4 of the powertrain 3 could be mechanically connected each to a respective front wheel 10, so as to drive into rotation exclusively said front wheel 10.

With reference to Figure 1, in the example shown, in particular, the electric motors 4 of the powertrain 3 are preferably located in the rear part of the vehicle-body 2 behind the passenger compartment, and are advantageously arranged one side by side and substantially coaxial to the other, on opposite sides of the vehicle vertical midplane.

Preferably, the powertrain 3 further comprises, for each electric motor 4, a respective drive shaft (not shown) which connects the electric motor 4 to the facing rear wheel 11, and optionally also a mechanical speed reducer (not shown) interposed between the electric motor 4 and the drive shaft.

In the example shown, moreover, each electric motor 4 is preferably a polyphase (three-phase) alternating current electric motor.

Therefore each electric power supply unit 7 is preferably adapted to convert the direct-current electric energy coming from the electric-energy accumulator 5 into alternating-current electric energy suitable for the corresponding electric motor 4.

Preferably, the electric motor 4 can also function as an electric generator.

In other words, the electric motor 4 is preferably a reversible-type electric traction machine, i.e. an electric machine which that can operate both as an electric motor by absorbing electric energy and generating a mechanical drive torque, and as an electric generator by absorbing mechanical energy and generating electric energy.

Each electric power supply unit 7, in turn, is preferably structured so as to control the flow of electric energy from the electric-energy accumulator 5 to the related electric motor 4 and vice versa.

In other words, each electric power supply unit 7 is preferably a static electric-energy conversion unit advantageously of a bidirectional type.

In the example shown, in particular, each electric power supply unit 7 preferably consists of, or in any case comprises, an electronically-controlled power inverter, advantageously of a bidirectional type, which is interposed between the electric-energy accumulator 5 and the related electric motor 4, and is adapted to convert the direct-current electric energy coming from the electric-energy accumulator 5 into alternating-current electric energy suitable for the related electric motor 4, preferably while varying its frequency and/or voltage in accordance with the signals coming from the electronic control unit 8.

With reference to Figure 1, on the other hand, the electric-energy accumulator 5 is preferably a rechargeable battery pack, and is preferably located in the front part of the vehicle-body 2.

The battery pack, in addition, preferably has a nominal capacity greater than or equal to 50 kWh and/or a nominal voltage greater than 400 Volts or, more conveniently, equal to approximately 800 Volts.

In other words, the electric-energy accumulator 5 is preferably a high-voltage battery pack.

General operation of the motor vehicle 1 is easily inferable from the description above. The electronic motor-control equipment 6 powers and commands the electric motors 4 of the powertrain 3 on the basis of the commands received from the driver of the vehicle.

In addition, the electronic motor-control equipment 6, or rather the electronic control unit 8, is programmed/ configured so as to implement, preferably upon occurrence of certain vehicle operating conditions, a motors-efficiency maximisation strategy that provides for alternately activating only one of the two electric motors 4 of the powertrain 3, causing it to temporarily deliver the sum of the mechanical powers and/or of the nominal drive torques requested to the two electric motors 4, i.e. the entire mechanical power and/or drive torque momentarily requested to the powertrain 3.

Preferably, the electronic motor-control equipment 6, or rather the electronic control unit 8, is furthermore programmed/configured so as to switch off the electric power supply unit 7 connected to the momentarily deactivated electric motor 4.

The vehicle operating conditions advantageously include, for example, the value of the power momentarily delivered by the electric motors 4 and/or the value of the drive torque requested to both the electric motors 4 and/or the road surface conditions, etcetera.

More in detail, the electronic motor-control equipment 6, or rather the electronic control unit 8, is preferably programmed/configured so as to implement said motors-efficiency maximisation strategy when the electric motors 4 deliver an overall mechanical power lower than a predetermined first maximum threshold, advantageously equal, for example, to 150 kW, and/or when the drive torque requested to the two electric motors 4 is lower than a predetermined second maximum threshold, advantageously equal, for example, to 100 Nm (newton metre).

In addition or alternatively, the electronic motor-control equipment 6, or rather the electronic control unit 8, is preferably programmed/configured so as to implement said motors-efficiency maximisation strategy when the efficiency of a single electric motor-electric power supply unit assembly operating according to said strategy is greater than that of the two electric motor-electric power supply unit assemblies operating at half the requested power.

Preferably, the switching frequency f_{c} between the two electric motors 4 is moreover greater than 40 Hz and, more conveniently, ranges between 50 and 200 Hz, and must advantageously take into account the maximum value of the drive torque gradient (increase in drive torque per unit of time) deliverable by the electric motor 4.

Advantageously, the switching frequency f_{c} can moreover vary as a function of one or more operating conditions of the vehicle.

In addition, the switching frequency f_{c} must preferably be greater than the resonance frequency of the transmission line connecting the electric motor 4 to the related drive wheel, i.e. to the related rear wheel 11.

Moreover the electronic motor-control equipment 6, or rather the electronic control unit 8, is preferably programmed/configured so as to autonomously inhibit/ deactivate/interrupt said motors-efficiency maximisation strategy upon occurrence of predetermined vehicle operating conditions.

For example, the electronic motor-control equipment 6 can be programmed/configured so as to autonomously inhibit/ deactivate/interrupt said motors-efficiency maximisation strategy when said strategy can impair the vehicle dynamic behaviour (for example when the motor vehicle is travelling on low-grip surfaces), and/or when said strategy causes, for example due to a temporarily anomalous interaction with the road surface, unforeseen effects of mechanical and/or acoustic resonance unwelcome to the person or persons aboard the motor vehicle 1.

Clearly, the electronic motors control equipment 6 can be programmed/configured so as to inhibit/deactivate said motors-efficiency maximisation strategy on request of the driver and/or if it recognises a sports driving that would require maximum performance of the powertrain 3.

In addition or alternatively, the electronic motor-control equipment 6 can be programmed/configured so as to autonomously deactivate/interrupt said motors-efficiency maximisation strategy when the mechanical power temporarily requested to each of the two electric motors 4 exceeds a predetermined third maximum threshold advantageously equal, for example, to 200 kW, and/or when the drive torque requested to each of the two electric motors 4 exceeds a predetermined fourth maximum threshold advantageously equal, for example, to 250 Nm.

In addition or alternatively, the electronic motor-control equipment 6 may be programmed/configured so as to autonomously deactivate/interrupt said motors-efficiency maximisation strategy when the voltage of the electric-energy accumulator 5, or rather of the battery pack, drops below a predetermined minimum threshold, advantageously equal, for example, to 50% of the nominal voltage.

In addition or alternatively, the electronic motor-control equipment 6 may also be programmed/configured so as to autonomously interrupt said motors-efficiency maximisation strategy when the efficiency of a single electric motor-electric power supply unit assembly operating according to said strategy becomes lower than that of the two electric motor-electric power supply unit assemblies operating at half the requested power.

Finally, the electronic motor-control equipment 6 may be optionally programmed/configured so as to autonomously deactivate/interrupt said motors-efficiency maximisation strategy when the difference between the drive torques theoretically requested to the two electric motors 4 (electronic differential) exceeds a predetermined fifth maximum threshold, advantageously equal for example to 20%.

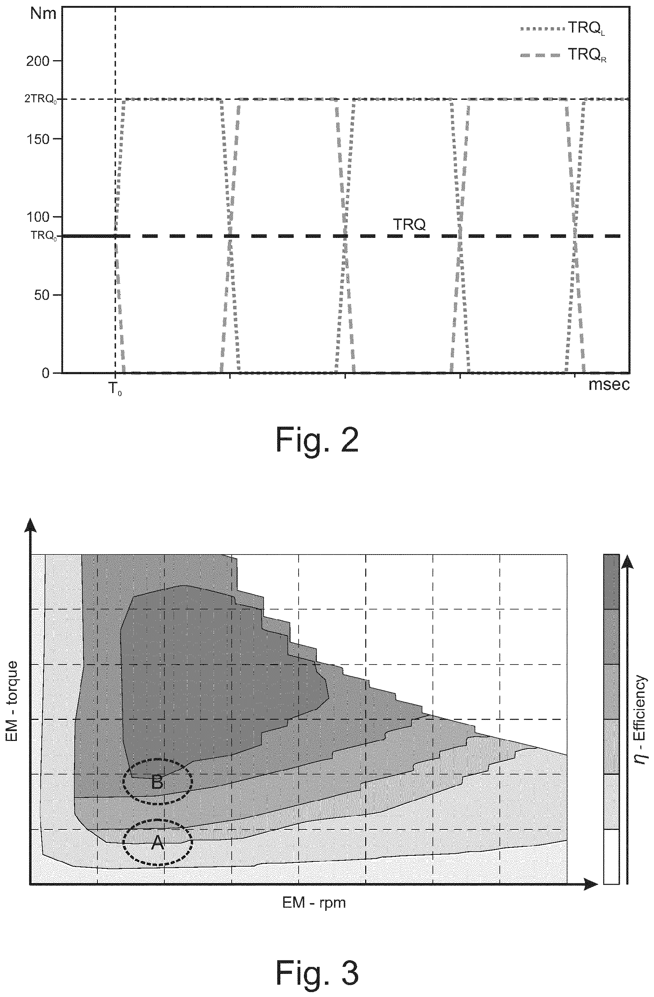

More in detail, with reference to Figures 2 and 3, assuming that, at instant T₀, each of the two electric motors 4 of the powertrain 3 is delivering the drive torque TRQ₀ and the conditions for implementing the motors efficiency maximisation strategy exist, the electronic motors control equipment 6, or rather the electronic control unit 8, establishes that there are the conditions for implementing said motors-efficiency maximisation strategy and, consequently, begins to alternately activate only one of the two electric motors 4 of the powertrain 3, causing it to temporarily deliver the entire mechanical power and/or drive torque momentarily requested to the powertrain 3, i.e. the drive torque 2TRQ₀. The switching from one electric motor 4 to the other takes place at a predetermined frequency f_{c}.

With reference to the diagram of Figure 3, the implementation of the motors-efficiency maximisation strategy moves the operating point of each electric motor 4 of the powertrain 3 from area A to area B, which has a higher efficiency.

Preferably, the frequency f_{c} with which the electronic motor-control equipment 6, or rather the electronic control unit 8, switches from one electric motor 4 to the other is moreover greater than 40 Hz and, more conveniently, comprised between 50 and 200 Hz.

Clearly, while the motors-efficiency maximisation strategy is being executed, the value of the overall mechanical power and/or drive torque momentarily requested and delivered by the powertrain 3, i.e. the drive torque 2TRQ₀, can vary over time on the basis of the commands given by the driver of the vehicle.

The advantages connected to the implementation of the motors-efficiency maximisation strategy described above are remarkable.

The motors-efficiency maximisation strategy makes it possible to increase the electromechanical conversion efficiency of the assembly of electric motors 4 and electric power supply units 7 (power inverters), without however compromising the performance of the motor vehicle 1.

In this way, in high-performance electrically-propelled cars, the energy losses are reduced at the same operating conditions of the powertrain 3, thereby increasing the range offered by the electric-energy accumulator 5.

In addition, the simultaneous switching off of the electric power supply unit 7 (power inverter) connected to the momentarily deactivated electric motor 4 makes it possible to further reduce the electric-energy consumption of the vehicle, with the resulting greater efficiency.

Last, but not least, experimental tests have shown that a switching frequency f_{c} greater than 40 Hz makes the implementation of the motors-efficiency maximisation strategy imperceptible to the persons on board the vehicle.

In other words, with a switching frequency f_{c} greater than 40 Hz, the inertia of the vehicle succeeds in bringing to zero the yaw phenomena normally associated with an asymmetric delivery of the drive torque.

Finally, it is clear that modifications and variations may be made to the motor vehicle 1 and to the method for controlling the electric motors 4 of the powertrain 3 without thereby departing from the scope of the present invention.

For example, the motor vehicle 1 may also be provided with an internal combustion engine, which is mechanically connected to the ground-resting wheels of a second/different axle of the vehicle, so as to drive them into rotation.

## Claims

1. A method of controlling the electric motors of a road motor vehicle (1) comprising: at least one pair of ground-resting wheels (11), which are arranged spaced side by side to one another, on opposite sides of the vertical midplane of the vehicle, to form a single axle of the vehicle; and a powertrain (3) comprising a pair of independent electric motors (4), each of which is mechanically connected to a respective wheel (11) of said axle, so as to drive into rotation exclusively the same wheel (11);
the method of controlling the electric motors being **characterised by** comprising a motors-efficiency maximisation step, which provides for alternately activating only one electric motor (4) of said pair of electric motors (4), causing it to temporarily deliver the full mechanical power and/or drive torque momentarily requested to said powertrain (3) .

2. Method for controlling the electric motors of a road motor vehicle according to claim 1, wherein said motors-efficiency maximisation step is implemented upon occurrence of certain vehicle operating conditions.

3. Method for controlling the electric motors of a road motor vehicle according to claim 1 or 2, wherein the switching frequency (fc) between the electric motors (4) of said pair of electric motors (4) is greater than 40 Hz.

4. Method for controlling the electric motors of a road motor vehicle according to claim 2 or 3, wherein the switching frequency (fc) between the electric motors (4) of said pair of electric motors (4) ranges between 50 and 200 Hz.

5. Method for controlling the electric motors of a road motor vehicle according to any one of the preceding claims, wherein said motor efficiency maximisation step is implemented when said pair of electric motors (4) delivers an overall mechanical power lower than a predetermined first maximum threshold, and/or when the drive torque requested to the two electric motors (4) of said pair of electric motors (4) is lower than a predetermined second maximum threshold.

6. Method for controlling the electric motors of a road motor vehicle according to any one of the preceding claims, wherein said motors-efficiency maximisation step is interrupted when the mechanical power temporarily requested to each electric motor (4) of said pair of electric motors (4) exceeds a predetermined third maximum threshold, and/or when the drive torque requested to each electric motor (4) of said pair of electric motors (4) exceeds a predetermined fourth maximum threshold.

7. Method for controlling the electric motors of a road motor vehicle according to any one of the preceding claims, wherein said motors-efficiency maximisation step is interrupted when the difference between the drive torques separately requested to the two motors electric motors (4) of said pair of electric motors (4) exceeds a predetermined fifth maximum threshold.

8. A road motor vehicle (1) comprising: at least one pair of ground-resting wheels (11), which are arranged spaced side by side to one another, on opposite sides of the vertical midplane of the vehicle, to form a single axle of the vehicle; a powertrain (3) that comprises a pair of independent electric motors (4), each of which is mechanically connected to a respective wheel (11) of said axle, so as to drive into rotation exclusively the same wheel (11); an electric-energy accumulator (5) which is capable of storing within itself a certain amount of electric energy to be supplied to said electric motors (4); and an electronic motors control equipment (6), which powers and commands both said electric motors (4) in accordance to the commands it receives from the driver of the vehicle;
the road motor vehicle (1) being **characterised in that** said electronic motors control equipment (6) is programmed/ configured to implement a method of controlling said electric motors (4) according to any one of the preceding claims.
